# EUROPÄISCHE PATENTANMELDUNG

(11) **EP 3 741 604 A1**
(43) Veröffentlichungstag der Anmeldung: **25.11.2020**
(21) Anmeldenummer: 20175500.6
(22) Anmeldetag: 19.05.2020
(51) Int. Cl.: B60K 28/16, B60K 17/346, B60K 17/00, B60W 50/00, B60W 40/064

(54) **VERFAHREN ZUR REGELUNG JE EINER SPERREINRICHTUNG MINDESTENS EINES DIFFERENTIALGETRIEBES**

(30) Priorität: 20.05.2019 DE 102019207305
(71) Anmelder: ZF Friedrichshafen AG, 88046 Friedrichshafen (DE)
(72) Erfinder: Schuster, Michael, 94157 Perlesreut (DE); Mühlbauer, Alexander, 94575 Windorf (DE)

(57) **Zusammenfassung**

Die Erfindung betrifft ein Verfahren zur Regelung je einer Sperreinrichtung (13, 14, 15) mindestens eines Differentialgetriebes (4, 7, 8) und/oder einer Achszuschalteinrichtung, welches in einem Antriebsstrang (1) eines Kraftfahrzeuges vorgesehen ist, wobei die je eine Sperreinrichtung (13, 14, 15) und/oder die Achszuschalteinrichtung aufgrund von Schlupf automatisch betätigt wird. Um eine Beeinträchtigung der je einen Sperreinrichtung (13, 14, 15) möglichst gering zu halten, wird ein vorausliegender Fahrstreckenabschnitt des Kraftfahrzeuges ermittelt und überprüft, ob für eine zu durchfahrende Fahrzeugposition des Fahrstreckenabschnitts bereits im Vorfeld eine kritische Schlupfsituation erfasst wurde. Mit Vorliegen einer bereits im Vorfeld erfassten, kritischen Schlupfsituation wird das Betätigen der mindestens einen Sperreinrichtung (13, 14, 15) vor Erreichen der der kritischen Schlupfsituation zugehörigen Fahrzeugposition durchgeführt.

## Beschreibung

Die Erfindung betrifft ein Verfahren zur Regelung je einer Sperreinrichtung mindestens eines Differentialgetriebes, welches in einem Antriebsstrang eines Kraftfahrzeuges vorgesehen ist, wobei die je eine Sperreinrichtung aufgrund von Schlupf automatisch betätigt wird. Des Weiteren betrifft die Erfindung ein Steuergerät zur Regelung je einer Sperreinrichtung mindestens eines Differentialgetriebes sowie ein Computerprogrammprodukt.

In Antriebssträngen von Kraftfahrzeugen kommen bei angetriebenen Achsen üblicherweise Differentialgetriebe als Querdifferentiale zur Anwendung, wobei über das einzelne Differentialgetriebe dabei eine Verteilung einer Antriebsleistung auf Räder der jeweiligen angetriebenen Achse vorgenommen wird und dabei bei Kurvenfahrt des Kraftfahrzeuges unterschiedliche Drehzahlen der Räder ermöglicht werden. Außerdem finden Differentialgetriebe auch bei Kraftfahrzeugen mit mehreren Antriebsachsen als Längsdifferentiale Anwendung, wobei hier eine Verteilung auf die mehreren angetriebenen Achsen realisiert wird. Insbesondere bei geländegängigen Fahrzeugen kann es zu einem Auftreten von Schlupf zwischen den Rädern einer Antriebsachse oder auch zwischen den mehreren angetriebenen Achsen kommen, wobei ein Differentialgetriebe in diesem Fall dafür sorgen würde, dass die Antriebsleistung zum überwiegenden Teil oder ausschließlich zu dem schlupfenden Rad einer Antriebsachse oder den schlupfenden Rädern einer der Antriebsachsen geleitet wird, was ein Vorwärtskommen des Kraftfahrzeuges erschwert oder sogar unmöglich machen würde. Aus diesem Grund sind bei geländegängigen Fahrzeugen Differentialgetriebe häufig mit Sperreinrichtungen ausgestattet, über welche das jeweilige Differentialgetriebe gezielt gesperrt und damit eine gleichmäßige Aufteilung der Antriebsleistung erzwungen wird.

Aus der DE 197 49 919 A1 geht ein Verfahren zur Regelung von Sperreinrichtungen von Differentialgetrieben hervor, die in einem Antriebsstrang eines Kraftfahrzeuges vorgesehen sind. Dabei wird eine automatische Betätigung der einzelnen Sperreinrichtungen herbeigeführt, wenn Schlupf erfasst wird.

Ausgehend vom vorstehend beschriebenen Stand der Technik ist es nun die Aufgabe der vorliegenden Erfindung, ein Verfahren zur Regelung je einer Sperreinrichtung mindestens eines Differentialgetriebes zu schaffen, wobei im Rahmen des Verfahrens eine automatische Betätigung der je einen Sperreinrichtung aufgrund von Schlupf bei möglichst geringer Beeinträchtigung der je einen Sperreinrichtung durchführbar sein soll.

Diese Aufgabe wird ausgehend vom Oberbegriff des Anspruchs 1 in Verbindung mit dessen kennzeichnenden Merkmalen gelöst. Die hierauf folgenden, abhängigen Ansprüche geben jeweils vorteilhafte Weiterbildungen der Erfindung wieder. Ein Steuergerät zur Regelung je einer Sperreinrichtung mindestens eines Differentialgetriebes ist ferner Gegenstand der Ansprüche 10 und 11. Ferner betrifft Anspruch 12 ein Computerprogrammprodukt.

Gemäß der Erfindung wird bei einem Verfahren zur Regelung je einer Sperreinrichtung mindestens eines Differentialgetriebes und/oder einer Achszuschalteinrichtung die Sperreinrichtung und/oder die Achszuschalteinrichtung aufgrund von Schlupf automatisch betätigt, wobei das mindestens eine Differentialgetriebe in einem Antriebsstrang eines Kraftfahrzeuges vorgesehen ist. Dabei ist unter einem "Differentialgetriebe" ein Getriebe mit einem Getriebeeingang und zwei Getriebeausgängen zu verstehen, über welches eine an dem Getriebeeingang eingeleitete Antriebsleistung auf die beiden Getriebeausgänge verteilt wird, wobei dabei unterschiedliche Drehzahlen der Getriebeausgänge ermöglicht werden. Besonders bevorzugt verfügt das Differentialgetriebe über einen drehfest mit dem Getriebeeingang verbundenen Differentialkorb, in welchem mindestens ein Ausgleichsrad drehbar gelagert ist, welches mit Abtriebsrädern der Getriebeausgänge jeweils im Zahneingriff steht. Die unterschiedlichen Drehzahlen der Abtriebsräder und damit der Getriebeausgänge wird dabei durch Rotation des mindestens einen Ausgleichsrades im Differentialkorb ermöglicht. Konkret kann das Differentialgetriebe dabei als Kegelraddifferential, als Stirnraddifferential oder auch in anderer Bauform vorliegen. Besonders bevorzugt sind mehrere Ausgleichsräder vorgesehen.

Je nach konkreter Anordnung des mindestens einen Differentialgetriebes im Antriebsstrang kann dieses als Querdifferential oder auch als Längsdifferential vorliegen. Im erstgenannten Fall wird dabei über das Differentialgetriebe eine Verteilung auf Antriebsräder einer Antriebsachse vorgenommen, während bei Ausführung des Differentialgetriebes als Längsdifferential das Differentialgetriebe für die Verteilung einer Antriebsleistung auf mehrere angetriebene Achsen eines Kraftfahrzeuges vorgesehen ist.

Dem mindestens einen Differentialgetriebe ist je eine Sperreinrichtung zugeordnet, welche im Sinne des erfindungsgemäßen Verfahrens aufgrund von Schlupf automatisch betätigt wird. Bei Betätigung erzwingt die Sperreinrichtung dabei eine gleichmäßige Verteilung einer Antriebsleistung vom Getriebeeingang des Differentialgetriebes auf die Getriebeausgänge, indem insbesondere einer der Getriebeausgänge drehfest mit dem Getriebeeingang verbunden und damit das Differentialgetriebe gesperrt wird. Hierdurch kann bei Schlupf an einem der angetriebenen Räder einer Antriebsachse bzw. an einer von mehreren angetriebenen Achsen verhindert werden, dass es zu einer reinen oder überwiegenden Zuführung der Antriebsleistung zu dem schlupfenden Rad bzw. der schlupfenden Achse kommt. Bei der Sperreinrichtung handelt es sich insbesondere um eine Sperrkupplung, wobei diese weiter bevorzugt insbesondere als formschlüssige Kupplung, beispielsweise in Form einer Klauenkupplung, vorliegt. Alternativ dazu könnte die Sperrkupplung aber auch als kraftschlüssige Kupplung und hier bevorzugt als Lamellenkupplung ausgeführt sein.

Die Erfindung umfasst nun die technische Lehre, dass ein vorausliegender Fahrstreckenabschnitt des Kraftfahrzeuges erfasst und überprüft wird, ob für eine zu durchfahrende Fahrzeugposition des Fahrstreckenabschnitts im Vorfeld bereits eine kritische Schlupfsituation erkannt wurde. Liegt eine im Vorfeld erfasste, kritische Schlupfsituation vor, so wird das Betätigen der Sperreinrichtung vor Erreichen der Fahrzeugposition durchgeführt, welche der kritischen Schlupfsituation zugehörig ist. Mit anderen Worten wird also im Rahmen des erfindungsgemäßen Verfahrens eine mit dem Kraftfahrzeug zu durchfahrender Fahrstreckenabschnitt ermittelt und dabei überprüft, ob an einer Fahrzeugposition dieses Fahrstreckenabschnitts schon früher eine kritische Schlupfsituation erfasst worden ist. Mit Vorliegen einer bereits früher erfassten, kritischen Schlupfsituation wird dabei bereits vor Erreichen der Fahrzeugposition, an welcher die kritische Schlupfsituation aufgetreten ist, das Betätigen der Sperreinrichtung herbeigeführt.

Ein derartiges Verfahren zur Regelung je einer Sperreinrichtung mindestens eines Differentialgetriebes hat dabei den Vorteil, dass durch Erfassen des vorausliegenden Fahrstreckenabschnitts und durch Überprüfung, ob für diesen Fahrstreckenabschnitt bereits eine kritische Schlupfsituation erfasst worden ist, ein vorausschauendes Betätigen der Sperreinrichtung vor Eintreten der kritischen Schlupfsituation durchgeführt werden kann. Dadurch kann vermieden werden, dass die Betätigung der Sperreinrichtung erst dann durchgeführt wird, wenn bereits Schlupf vorherrscht. Denn insbesondere bei Ausführung der je einen Sperreinrichtung als formschlüssige Sperrkupplung kann dies aufgrund der über die Sperreinrichtung dann vor dem Sperren abzubauenden Differenzdrehzahlen auf Dauer zu einer Abnutzung oder sogar einer Beschädigung der Sperreinrichtung führen. Dadurch, dass ein Betätigen der Sperreinrichtung gezielt vor Erreichen der Fahrzeugposition, an welcher bereits eine kritische Schlupfsituation aufgetreten ist, herbeigeführt wird, kann dies frühzeitig bei einem erneuten Durchfahren des jeweiligen Fahrstreckenabschnitts durchgeführt werden. Insbesondere bei Fahrzeugen, die immer wieder dieselben Streckenabschnitte befahren, wie beispielsweise Baustellen- oder Minenbaufahrzeugen, kann durch vorausschauende Betätigung der Sperreinrichtung so frühzeitig auf eine, immer wieder an derselben Stelle auftretende Schlupfsituation reagiert werden.

Bei der DE 197 49 919 A1 wird zwar ein automatisches Betätigen von Sperreinrichtungen von Differentialgetrieben aufgrund von Schlupf durchgeführt, dies ist aber nicht zeitlich vorgelagert vor Auftreten des Schlupfs möglich, sondern findet erst mit Erfassen der tatsächlichen Schlupfsituation statt.

Zur Erfassung des vorausliegenden Fahrstreckenabschnitts ist im Sinne der Erfindung bevorzugt eine entsprechende Sensorik bei dem Kraftfahrzeug vorgesehen, über welche die jeweils aktuelle Position des Kraftfahrzeuges erfasst werden kann. So kann es sich bei einer derartigen Sensorik insbesondere um einen GPS-Sensor handeln, mittels welchem eine genaue Ermittlung der aktuellen Fahrzeugposition realisierbar ist.

Bei dem Kraftfahrzeug handelt es sich im Rahmen der Erfindung insbesondere um ein geländegängiges Fahrzeug, wie beispielsweise eine Arbeitsmaschine, zum Beispiel in Form eines Dumpers oder eines Baustellen-LKWs, oder auch einen allradgetriebenen Lkw, einen Radpanzer oder Ähnliches. Das erfindungsgemäße Verfahren kann jedoch prinzipiell bei jedem Kraftfahrzeug Anwendung finden. Sind bei dem jeweiligen Kraftfahrzeug zudem mehrere Differentialgetriebe vorgesehen, sei es in Form von Querdifferential in oder eines längst Differentials, so kann das erfindungsgemäße Verfahren bei jedem dieser Differentialgetriebe Anwendung finden.

Entsprechend einer Ausführungsform der Erfindung wurde die kritische Schlupfsituation bei mindestens einem vorherigen Durchfahren des Fahrstreckenabschnitts erkannt, indem ein Auftreten von Schlupf erfasst und für die zugehörige Fahrzeugposition hinterlegt wurde. In diesem Fall ist die kritische Schlupfsituation also dadurch ermittelt worden, dass bei mindestens einem im Vorfeld stattgefundenen Durchfahren der gleichen Fahrstrecke an der Position des Fahrzeugs bereits Schlupf aufgetreten ist und dies zusammen mit der zugehörigen Fahrzeugposition erfasst wurde. Insbesondere wird dies dabei in einem entsprechenden Speicher abgespeichert. In Weiterbildung dieser Ausführungsform wird erst bei einem mehrmaligen Durchfahren der zugehörigen Fahrzeugposition mit Schlupf dies als kritische Schlupfsituation deklariert. In vorteilhafter Weise kann hierdurch verhindert werden, dass auch Fahrzeugpositionen hinsichtlich des Auftretens von Schlupf als kritisch eingestuft werden, an denen Schlupf nur ausnahmsweise aufgetreten ist, beispielsweise aufgrund der Fahrweise. Vielmehr soll eine kritische Schlupfsituation nur dann erfasst werden, wenn dies beim Durchfahren der Fahrzeugposition des Streckenabschnitts immer wieder auftreten würde, beispielsweise aufgrund der dort vorherrschenden Bodenverhältnisse. Die Anzahl, die für das Deklarieren einer kritischen Schlupfsituation an der jeweiligen Fahrzeugposition notwendig ist, kann hierbei festgelegt oder auch frei vorgebbar sein, liegt bevorzugt aber bei mindestens zwei im Vorfeld erfassten Schlupfsituationen an der jeweiligen Fahrzeugposition.

Es ist eine weitere Ausgestaltung der vorgenannten Ausführungsform, dass das mindestens eine vorherige Durchfahren mit dem Kraftfahrzeug vorgenommen wurde. In diesem Fall wurde also die kritische Schlupfsituation durch das Kraftfahrzeug selbst bei mindestens einem vorherigen Durchfahren des Streckenabschnitts erfasst und bei einem nachfolgenden erneuten Durchfahren des Streckenabschnitts zu einem automatischen, vorgelagerten Betätigen der Sperreinrichtung herangezogen. In Weiterbildung wird die kritische Schlupfsituation in einem Netzwerk gespeichert, mit welchem das Kraftfahrzeug im Datenaustausch steht. Dadurch kann diese Information in einem übergeordneten und nicht im Kraftfahrzeug befindlichen Datenspeicher abgelegt und aus diesem heraus auch zur Regelung von Sperreinrichtungen bei anderen Kraftfahrzeugen herangezogen werden. Der Datenaustausch zwischen dem Kraftfahrzeug und dem Netzwerk ist dabei insbesondere über eine Funkverbindung realisiert.

Alternativ oder ergänzend dazu kann das mindestens eine vorherige Durchfahren aber auch mit einem anderen Kraftfahrzeug vorgenommen und in einem Netzwerk gespeichert worden sein, mit welchem das vorliegende Kraftfahrzeug im Datenaustausch steht. Denn wenn das Kraftfahrzeug Zugriff auf Informationen eines Netzwerks hat, in welchem Informationen hinsichtlich einer oder mehrerer kritischer Schlupfsituationen hinterlegt sind, so kann die vorgelagerte Betätigung der je einen Sperreinrichtung auch vorgenommen werden, wenn die kritische Schlupfsituation durch ein anderes Kraftfahrzeug erfasst worden ist. Insbesondere bei einem System, bei welchem bestimmte Fahrstrecken wiederkehrend durch mehrere Fahrzeuge befahren werden, kann hierdurch auch bei mehreren Fahrzeugen eine geeignete Anpassung einer Strategie bei Betätigung der je einen Sperreinrichtung realisiert werden.

Gemäß einer vorteilhaften Ausgestaltungsmöglichkeit der Erfindung wird bei Auftreten von Schlupf neben der zugehörigen Fahrzeugposition auch eine unmittelbar vorhergehende Fahrzeugposition miterfasst. Dadurch kann aus diesen beiden Positionen eine Fahrtrichtung des Kraftfahrzeuges ermittelt und damit auch eine genaue Aussage über die Bewegung des Kraftfahrzeuges vor Auftreten des Schlupfs getroffen werden. Dementsprechend kann das zeitlich vorgelagerte Betätigen der je einen Sperreinrichtung optimiert werden, indem die Fahrtrichtung des Kraftfahrzeuges bei Überprüfung auf kritische Schlupfsituationen miteinbezogen wird und damit eine genauere Aussage über den für das Auftreten der Schlupfsituation notwendigen Zustand getroffen werden kann. Besonders bevorzugt wird bei Überprüfung auf eine kritische Schlupfsituation an einer Fahrzeugposition eines vorausliegenden Fahrstreckenabschnitts dann auch die aktuelle Fahrtrichtung des Kraftfahrzeugs miteinbezogen.

Es ist eine weitere Ausführungsform der Erfindung, dass die kritische Schlupfsituation mit einer Zeitangabe hinterlegt wurde. Dies hat den Vorteil, dass somit auch ein zeitlicher Bezug hinterlegt wird, indem neben der Fahrzeugposition bei Auftreten des Schlupfs und der ggf. vorhergehenden Fahrzeugposition auch eine Zeitangabe und hier insbesondere eine Datums- und Uhrzeitangabe hinterlegt wird. In Weiterbildung dieser Ausführungsform wird die kritische Schlupfsituation nach Verstreichen eines Zeitfensters nach Hinterlegung wieder entfernt. Dadurch wird dem Umstand Rechnung getragen, dass sich Umstände, die zum Schlupf geführt haben, über die Zeit ändern können, wie beispielsweise die Beschaffenheit des Bodens. Darüber hinaus können auch weitere Kriterien zum Entfernen einer hinterlegten kritische Schlupfsituation getroffen sein, wie beispielsweise die Feuchtigkeit, die Temperatur oder ähnliches. Darüber hinaus kann auch ein manuelles Entfernen einer gespeicherten, kritischen Schlupfsituation möglich sein.

Gegenstand der Erfindung ist zudem ein Steuergerät zur Regelung je einer Sperreinrichtung mindestens eines Differentialgetriebes, welches in einem Antriebsstrang eines Kraftfahrzeuges vorgesehen ist. Dabei ist das Steuergerät dazu eingerichtet, die je eine Sperreinrichtung aufgrund von Schlupf automatisch zu betätigen, einen vorausliegenden Fahrstreckenabschnitt des Kraftfahrzeuges zu erfassen und zu überprüfen, ob für eine zu durchfahrende Fahrzeugposition des Fahrstreckenabschnitts bereits im Vorfeld eine kritische Schlupfsituation erfasst worden ist. Außerdem ist das Steuergerät dazu ausgebildet, mit Vorliegen einer bereits im Vorfeld erfassten, kritischen Schlupfsituation das Betätigen der Sperreinrichtung vor Erreichen der der kritischen Schlupf Situation zugehörigen Fahrzeugposition durchzuführen. Hierbei kann es sich bei dem Steuergerät insbesondere um ein Getriebesteuergerät handeln. Bevorzugt steht das Steuergerät insbesondere in einem Datenbussystem mit anderen Steuergeräten und Sensoren des Kraftfahrzeuges in Verbindung und kann mit diesen Daten austauschen.

Außerdem hat die vorliegende Erfindung ein Computerprogrammprodukt zum Gegenstand, welches bei Ausführung durch einen Prozessor, insbesondere eines Prozessors des Steuergeräts, die Durchführung der Schritte gemäß dem erfindungsgemäßen Verfahren veranlasst. Dabei ist eine Routine zur Regelung der je einen Sperreinrichtung durch entsprechende in einer Software hinterlegte Steuerungsbefehle umgesetzt.

Die Erfindung ist nicht auf die angegebene Kombination der Merkmale des Hauptanspruchs oder der hiervon abhängigen Ansprüche beschränkt. Es ergeben sich darüber hinaus Möglichkeiten, einzelne Merkmale, auch soweit sie aus den Ansprüchen, der nachfolgenden Beschreibung einer bevorzugten Ausführungsform der Erfindung oder unmittelbar aus den Zeichnungen hervorgehen, miteinander zu kombinieren. Die Bezugnahme der Ansprüche auf die Zeichnungen durch Verwendung von Bezugszeichen soll den Schutzumfang der Ansprüche nicht beschränken.

Eine vorteilhafte Ausführungsform der Erfindung, die nachfolgend erläutert wird, ist in den Zeichnungen dargestellt. Es zeigt:
- Fig. 1: eine schematische Ansicht eines Antriebsstranges eines Kraftfahrzeuges;
- Fig. 2: ein Ablaufdiagramm einer ersten Routine eines erfindungsgemäßen Verfahrens entsprechend einer bevorzugten Ausführungsform der Erfindung; und
- Fig. 3: ein Ablaufdiagramm einer zweiten Routine des erfindungsgemäßen Verfahrens.

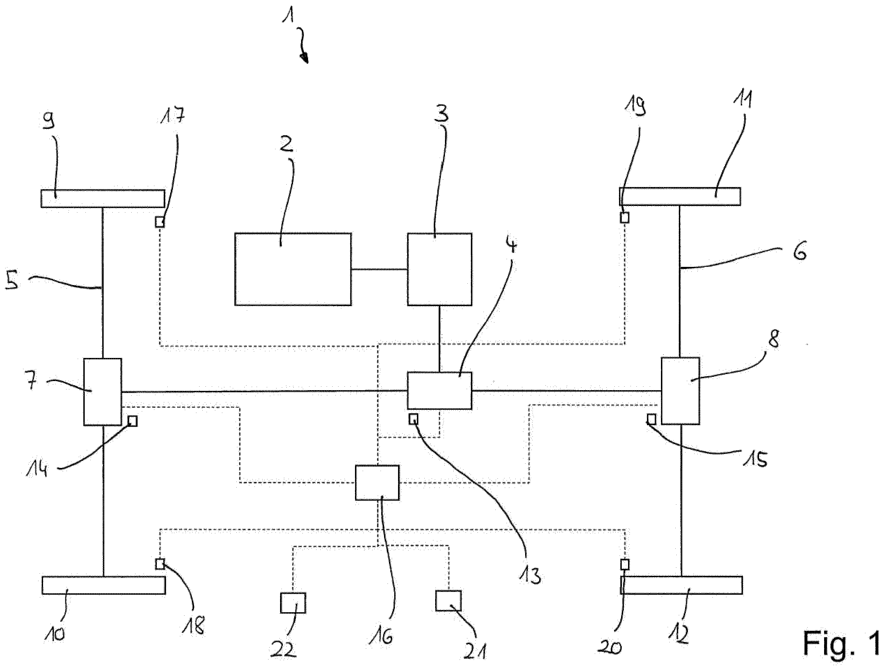

Aus Fig. 1 geht eine schematische Ansicht eines Antriebsstranges 1 eines Kraftfahrzeuges hervor, bei welchem es sich um ein geländegängiges Fahrzeug handelt, bevorzugt ein Baustellen- oder Minenbaufahrzeug, wie beispielsweise einen Dumper. Der Antriebsstrang 1 umfasst eine Antriebsmaschine 2, welche bevorzugt als Verbrennungskraftmaschine vorliegt und abtriebsseitig mit einem Hauptgetriebe 3 - gegebenenfalls über ein nicht weiter dargestelltes, zwischenliegendes Anfahrelement - verbunden bzw. verbindbar ist. Alternativ bevorzugt kann die Antriebsmaschine 2 auch als Elektromotor ausgebildet ein, wobei ein zentraler Elektromotor oder je Achse ein separater Elektromotor vorgesehen sein kann.

Das Hauptgetriebe 3 steht abtriebsseitig mit einem Differentialgetriebe 4 in Verbindung, welches als Längsdifferential eine Antriebsleistung auf zwei Antriebsachsen 5 und 6 des Kraftfahrzeuges verteilt. Den Antriebsachsen 5 und 6 ist dann jeweils je ein Differentialgetriebe 7 bzw. 8 zugeordnet, wobei das einzelne Differentialgetriebe 7 bzw. 8 an der jeweiligen Antriebsachse 5 bzw. 6 eine Aufteilung der vom Differentialgetriebe 4 weitergeleiteten Antriebsleistung auf Antriebsräder 9 und 10 bzw. 11 und 12 der jeweiligen Antriebsachse 5 bzw. 6 vornimmt. Dementsprechend sind die Differentialgetriebe 7 und 8 als Querdifferentiale vorgesehen. Die Differentialgetriebe 4, 7 und 8 weisen einen dem Fachmann prinzipiell bekannten Aufbau auf, wobei die Differentialgetriebe 7 und 8 hierbei bevorzugt als Kegelraddifferentiale ausgeführt sind, während das Differentialgetriebe 4 insbesondere als Stirnraddifferential vorliegt.

Wie zudem in Fig. 1 zu erkennen ist, ist den Differentialgetrieben 4, 7 und 8 jeweils je eine Sperreinrichtung 13 bzw. 14 bzw. 15 zugeordnet, über welche das jeweilige Differentialgetriebe 4 bzw. 7 bzw. 8 bei Betätigung gesperrt wird. Die Sperreinrichtungen 13 bis 15 liegen dabei bevorzugt jeweils als Sperrkupplungen und hierbei insbesondere als Klauenkupplungen vor. Eine Betätigung der Sperreinrichtungen 13 bis 15 wird dabei über ein Steuergerät 16 geregelt, bei welchem es sich bevorzugt um ein Getriebesteuergerät des Hauptgetriebes 3 handelt. Dabei leitet das Steuergerät 16 eine Betätigung der jeweiligen Sperreinrichtung 13 bzw. 14 bzw. 15 ein, wenn bestimmte Kriterien erfüllt sind. Ein Kriterium ist hierbei das Erfassen von Schlupf an einer der Antriebsachsen 5 oder 6 oder auch zwischen den Antriebsachsen 5 und 6, wobei in diesem Fall dann das jeweilige Differentialgetriebe 7 oder 8 bzw. 4 über die jeweilige Sperreinrichtung 14 oder 15 bzw. 13 gesperrt wird. Das Steuergerät 16 kann hierbei Schlupf an der einzelnen Antriebsachse 5 oder 6 oder auch zwischen den Antriebsachsen 5 und 6 erfassen, indem es Daten von Drehzahlsensoren 17 bis 20 der Antriebsräder 9 bis 12 erhält. Denkbar ist es ebenfalls, Drehzahlinformationen von den Gelenkwelle vom Differentialgetriebe 4 zu den Differentialgetrieben 7 und 8 zu erfassen. Weitere Kriterien für eine Betätigung der jeweiligen Sperreinrichtung 13 bzw. 14 bzw. 15 können aber auch ein über die Antriebsmaschine 2 bereitgestelltes Drehmoment, eine zu bewältigende Steigung und/oder eine im Hauptgetriebe 3 geschaltet Übersetzung sein. Neben den Drehzahlsensoren 17 bis 20 steht das Steuergerät 16 außerdem mit einem Positionssensor 21 im Datenaustausch, über welchen eine aktuelle Position des Kraftfahrzeuges erfasst wird. Außerdem steht das Steuergerät 16 noch mit einer Sende-/Empfangseinheit 22 in Verbindung, über welche das Steuergerät 16 Daten mit einem übergeordneten Netzwerk austauschen kann.

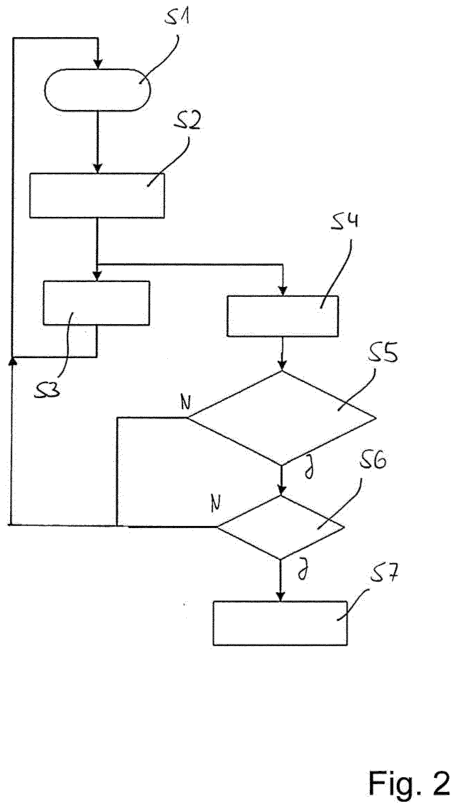

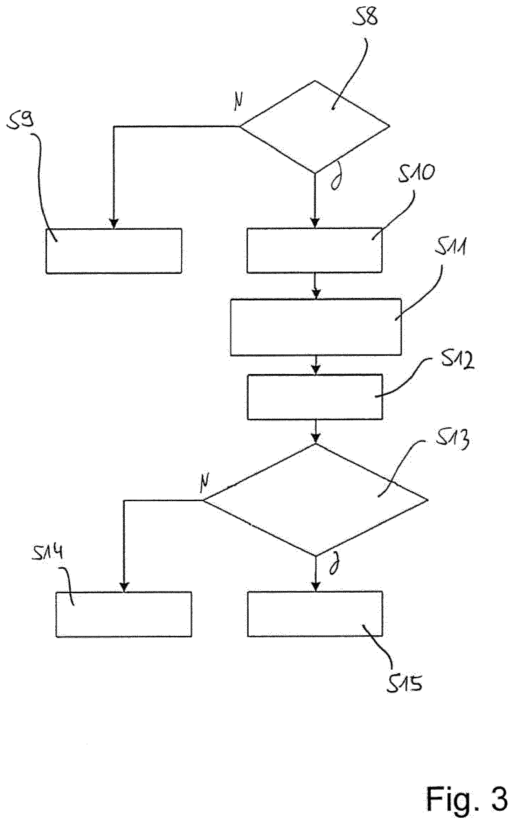

Allerdings kann ein wiederkehrendes Betätigen der jeweiligen Sperreinrichtung 13 bzw. 14 bzw. 15 bei bereits vorliegendem Schlupf an der jeweiligen Antriebsachse 5 oder 6 bzw. zwischen den Antriebsachsen 5 und 6 aufgrund der dann bereits vorherrschenden Differenzdrehzahlen eine starke Abnutzung bzw. Beschädigung der jeweiligen Sperreinrichtung 13 bzw. 14 bzw. 15 nach sich ziehen. Aus diesem Grund kommt vorliegend ein Verfahren zum Einsatz, um beim wiederholten Befahren einer Fahrstrecke, auf welcher es an bestimmten Fahrzeugpositionen zu einem schlupfbedingten Betätigen einer oder mehrerer der Sperreinrichtungen 13 bis 15 kommt, das jeweilige Betätigen vorgelagert und damit bei noch nicht vorherrschender Drehzahldifferenz durchzuführen. Teilaspekte des erfindungsgemäßen Verfahrens sind dabei in den Fig. 2 und 3 anhand von Ablaufdiagrammen dargestellt.

Dabei zeigt Fig. 2 eine erste Routine, die bei Betrieb des Kraftfahrzeuges kontinuierlich durchlaufen wird. Zu Beginn dieser Routine wird in einem ersten Schritt S1 die aktuelle Fahrzeugposition ermittelt, wozu das Steuergerät 16 entsprechende Daten des Positionssensors 21 abfragt. In einem darauffolgenden Schritt S2 wird die so ermittelte, aktuelle Fahrzeugposition abgespeichert, bevor in einem Schritt S3 eine gewisse Zeit abgewartet wird, bevor wieder vor Schritt S1 zurückgesprungen wird. Besonders bevorzugt beträgt eine Wartezeit hierbei 1 Sekunde. Parallel zu Schritt S3 und der hier definierten Wartezeit wird in einem Schritt S4 aus den hinsichtlich der Fahrzeugposition erhaltenen Daten ein vorausliegender Fahrstreckenabschnitt ermittelt, wobei hierzu bereits mindestens zwei Fahrzeugpositionen erfasst sein müssen. Danach wird in einem Schritt S5 abgefragt, ob für die aktuelle Fahrzeugposition und den ermittelten Fahrstreckenabschnitt bereits ein Auftreten von Schlupf an einer der Antriebsachsen 5 oder 6 oder auch zwischen den Antriebsachsen 5 und 6 erfasst worden ist. Hierzu greift das Steuergerät 16 auf entsprechende Speicherinformationen zurück, die entweder durch das Steuergerät 16 selbst oder durch Datenaustausch mit dem Netzwerk über die Sende-/Empfangseinheit 22 gewonnen worden sein können. Ist dies zu verneinen, so wird ebenfalls vor Schritt S1 zurückgesprungen.

Ist das Ergebnis in Schritt S5 hingegen, dass für die aktuelle Fahrzeugposition und den vorausliegenden Fahrstreckenabschnitt bereits ein Auftreten von Schlupf erfasst worden ist, so wird zu Schritt S6 übergegangen, in welchem abgefragt wird, ob dieses Auftreten von Schlupf bereits als kritische Schlupfsituation erkannt worden ist. Kriterium hierfür ist, dass für die aktuelle Fahrzeugpositionen und den vorausliegenden Fahrstreckenabschnitt ein Grenzwert für das Auftreten von Schlupf überschritten worden ist. Auch dafür wird durch das Steuergerät 16 auf entsprechende Speicherinformationen zurückgegriffen. Ist das Ergebnis in Schritt S6 negativ, so wird ebenfalls wieder vor Schritt S1 zurückgesprungen, wohingegen im zu bejahen den Fall zu Schritt S7 übergegangen wird, in welchem durch das Steuergerät 16 eine Betätigung der Sperreinrichtung 13 bzw. 14 bzw. 15 des betroffenen Differentialgetriebes 4 oder 7 oder 8 eingeleitet wird.

Fig. 3 zeigt das Ablaufdiagramm einer zweiten Routine des erfindungsgemäßen Verfahrens, welche parallel zu der ersten Routine aus Fig. 2 abläuft. So wird bei dieser zweiten Routine in einem Schritt S8 zunächst überprüft, ob eine Betätigung einer der Sperreinrichtungen 13 bis 15 aufgrund von Schlupf stattgefunden hat. Ist dies zu verneinen, so wird in einem Schritt S9 die zweite Routine zunächst beendet, bevor sie nach Ablauf eines definiertes Zeitfensters erneut mit Schritt S8 gestartet wird.

Ist das Ergebnis in Schritt S8 hingegen positiv, so wird in einem Schritt S10 die bei Betätigung der jeweiligen Sperreinrichtungen 13 bzw. 14 bzw. 15 aktuelle Fahrzeugposition abgefragt, wozu das Steuergerät 16 auf Daten des Positionssensors 21 zurückgreift. Die aktuelle Fahrzeugposition wird dann in einem Schritt S11 mit einer hierzu unmittelbar vorhergehenden Fahrzeugposition in einem Speicher abgelegt und aus beiden Positionen in einem Schritt S12 ein durchfahrener Fahrstreckenabschnitt bestimmt. Darauffolgend wird in einem Schritt S13 abgefragt, ob für die Fahrzeugposition und den durchfahrenden Fahrstreckenabschnitt bereits eine Betätigung der jeweiligen Sperreinrichtungen 13 bzw. 14 bzw. 15 erfolgt ist. Ist dies zu verneinen, so wird in einem Schritt S14 ein Wert für das Auftreten von Schlupf an der Fahrzeugposition und des durchfahrenen Fahrstreckenabschnitts auf eins gesetzt, wohingegen im zu bejahen den Fall in einem Schritt S15 der Wert um eins erhöht wird. Sobald der Wert einen vorgegebenen Grenzwert überschreitet, wird dies als kritische Schlupfsituation an der Fahrzeugposition deklariert. Auf diese Informationen wird dann in der parallel ablaufenden, ersten Routine in den Schritten S5 bis S7 zurückgegriffen. Darüber hinaus kann das Steuergerät 16 die im Rahmen der zweiten Routine ermittelten Informationen auch dem übergeordneten Netzwerk mittels der Sende-/Empfangseinheit 22 zur Verfügung stellen, so dass auch andere Kraftfahrzeuge diese Informationen entsprechend verarbeiten können.

Hinsichtlich der Abspeicherung von Informationen über das Auftreten von Schlupf oder auch kritischer Schlupfsituationen kann zudem eine zeitlich begrenzte Speicherung vorgesehen sein. So ist es denkbar, die Information über das Auftreten von Schlupf oder auch das Erfassen einer kritischen Schlupfsituation mit einer Datums- und Uhrzeitangabe zu hinterlegen und mit Ablauf eines definierten Zeitfensters wieder zu entfernen. Darüber hinaus kann dieses Entfernen auch an andere Kriterien, wie beispielsweise Temperatur, Feuchtigkeit und ähnliches geknüpft sein. Außerdem kann ein manuelles Entfernen ebenfalls vorgesehen sein.

Mittels eines erfindungsgemäßen Verfahrens kann eine automatische Betätigung einer jeweiligen Sperreinrichtung aufgrund von Schlupf bei möglichst geringer Beeinträchtigung der jeweiligen Sperreinrichtung realisiert werden.

### Bezugszeichen

- 1: Antriebsstrang
- 2: Antriebsmaschine
- 3: Hauptgetriebe
- 4: Differentialgetriebe
- 5: Antriebsachse
- 6: Antriebsachse
- 7: Differentialgetriebe
- 8: Differentialgetriebe
- 9: Antriebsrad
- 10: Antriebsrad
- 11: Antriebsrad
- 12: Antriebsrad
- 13: Sperreinrichtung
- 14: Sperreinrichtung
- 15: Sperreinrichtung
- 16: Steuergerät
- 17: Drehzahlsensoren
- 18: Drehzahlsensor
- 19: Drehzahlsensor
- 20: Drehzahlsensor
- 21: Positionssensor
- 22: Sende-/Empfangseinheit

- S1 bis S15: Einzelschritte

## Patentansprüche

1. Verfahren zur Regelung je einer Sperreinrichtung (13, 14, 15) mindestens eines Differentialgetriebes (4, 7, 8) und/oder einer Achszuschalteinrichtung, welche in einem Antriebsstrang (1) eines Kraftfahrzeuges vorgesehen ist, wobei die je eine Sperreinrichtung (13, 14, 15) und/oder die Achszuschalteinrichtung aufgrund von Schlupf automatisch betätigt wird, **dadurch gekennzeichnet, dass** ein vorausliegender Fahrstreckenabschnitt des Kraftfahrzeuges ermittelt und überprüft wird, ob für eine zu durchfahrende Fahrzeugposition des Fahrstreckenabschnitts im Vorfeld bereits eine kritische Schlupfsituation erfasst wurde, und dass mit Vorliegen einer bereits im Vorfeld erfassten, kritischen Schlupfsituation das Betätigen der je einen Sperreinrichtung (13, 14, 15) vor Erreichen der der kritischen Schlupfsituation zugehörigen Fahrzeugposition durchgeführt wird.

2. Verfahren nach Anspruch 1, **dadurch gekennzeichnet, dass** die kritische Schlupfsituation bei mindestens einem vorherigen Durchfahren des Fahrstreckenabschnitts erkannt wurde, indem ein Auftreten von Schlupf erfasst und für die zugehörige Fahrzeugposition hinterlegt wurde.

3. Verfahren nach Anspruch 2, **dadurch gekennzeichnet, dass** erst bei einem mehrmaligen Durchfahren der zugehörigen Fahrzeugposition mit Schlupf dies als kritische Schlupfsituation deklariert wird.

4. Verfahren nach Anspruch 2 oder 3, **dadurch gekennzeichnet, dass** das mindestens eine vorherige Durchfahren mit dem Kraftfahrzeug vorgenommen wurde.

5. Verfahren nach Anspruch 4, **dadurch gekennzeichnet, dass** die kritische Schlupfsituation in einem Netzwerk gespeichert wird, mit welchem das Kraftfahrzeug im Datenaustausch steht.

6. Verfahren nach Anspruch 2 oder 3, **dadurch gekennzeichnet, dass** das mindestens eine vorherige Durchfahren mit einem anderen Kraftfahrzeug vorgenommen und in einem Netzwerk gespeichert wurde, mit welchem das vorliegende Kraftfahrzeug im Datenaustausch steht.

7. Verfahren nach einem der Ansprüche 2 bis 6, **dadurch gekennzeichnet, dass** bei Auftreten von Schlupf neben der zugehörigen Fahrzeugposition auch eine unmittelbar vorhergehende Fahrzeugposition miterfasst wurde.

8. Verfahren nach einem der vorhergehenden Ansprüche, **dadurch gekennzeichnet, dass** die kritische Schlupfsituation mit einer Zeitangabe hinterlegt wurde.

9. Verfahren nach Anspruch 8, **dadurch gekennzeichnet, dass** die kritische Schlupfsituation nach Verstreichen eines Zeitfensters nach Hinterlegung wieder entfernt wird.

10. Steuergerät (16) zur Regelung je einer Sperreinrichtung (13, 14, 15) mindestens eines Differentialgetriebes (4, 7, 8) und/oder einer Achszuschalteinrichtung, welche in einem Antriebsstrang (1) eines Kraftfahrzeuges vorgesehen ist, wobei das Steuergerät (16) dazu eingerichtet ist, die je eine Sperreinrichtung (13, 14, 15) und/oder die Achszuschalteinrichtung aufgrund von Schlupf automatisch zu betätigen, einen vorausliegenden Fahrstreckenabschnitt des Kraftfahrzeuges zu erfassen und zu überprüfen, ob für eine zu durchfahrende Fahrzeugposition des Fahrstreckenabschnitts bereits im Vorfeld eine kritische Schlupfsituation erfasst worden ist, und wobei das Steuergerät (16) dazu ausgebildet ist, mit Vorliegen einer bereits im Vorfeld erfassten, kritischen Schlupfsituation das Betätigen der je einen Sperreinrichtung (13, 14, 15) vor Erreichen der der kritischen Schlupfsituation zugehörigen Fahrzeugposition durchzuführen.

11. Steuergerät (16) nach Anspruch 10, durch welches ein Verfahren nach einem oder mehreren der Ansprüche 2 bis 9 durchführbar ist.

12. Computerprogrammprodukt für ein Steuergerät (16) nach Anspruch 10 oder 11, mit welchem ein Verfahren nach einem oder mehreren der Ansprüche 1 bis 9 durchführbar ist, wobei eine Routine zur Regelung der je einen Sperreinrichtung (13, 14, 15) und/oder der Achszuschalteinrichtung durch entsprechende in einer Software hinterlegte Steuerungsbefehle umgesetzt ist.
